# EUROPÄISCHE PATENTSCHRIFT

(11) **EP 2 427 086 B1**
(45) Veröffentlichungstag und Bekanntmachung des Hinweises auf die Patenterteilung: **23.01.2013**
(21) Anmeldenummer: 10722561.7
(22) Anmeldetag: 29.04.2010
(51) Int. Cl.: A47J 36/02, A47J 27/00

(54) **INDUKTIONSGESCHIRR ZUM WARMHALTEN VON SPEISEN**
INDUCTION COOKWARE FOR KEEPING FOOD WARM
USTENSILE À INDUCTION POUR LE MAINTIEN AU CHAUD D'ALIMENTS

(30) Priorität: 06.05.2009 DE 102009025750
(43) Veröffentlichungstag der Anmeldung: 14.03.2012
(73) Patentinhaber: Gastros AG, 8005 Zürich (CH)
(72) Erfinder: Hafner, Timo, 78315 Radolfzell (DE)
(74) Vertreter: Späth, Dieter
(86) Internationale Anmeldenummer: PCT/DE2010/000485
(87) Internationale Veröffentlichungsnummer: WO 2010/127662

(56) Entgegenhaltungen:
- EP-A1- 0 688 526
- WO-A1-02/01991
- US-A- 5 647 271

## Beschreibung

### Technische Gebiet

Die vorliegende Erfindung betrifft ein Induktionsgeschirr wie beispielsweise eine Schüssel oder eine Schale zum Warmhalten von Speisen mit den Merkmalen des Oberbegriffs des Anspruchs 1, das insbesondere zum Anbieten warmer Speisen an Buffets im Gastronomiebereich vorgesehen ist.

Ein Kochgeschirr, wie beispielsweise ein Kochtopf oder eine Pfanne, wird im Allgemeinen aus einer mit Nahrungsmittel verträglichen Legierung hergestellt, beispielsweise aus einem nichtrostenden Stahl oder aus einer Aluminiumlegierung. Wenn das Kochgeschirr durch Induktion erwärmt werden soll, weist sein Boden eine ferromagnetischen Legierung auf. Nahrungsmittelverträgliche Legierungen sind im Allgemeinen nicht magnetisch und können daher wegen ihres allgemein massgeblichen Frequenzbereichs nicht durch Induktion erwärmt werden. Das ferromagnetische Material kann dagegen durch Induktion erwärmt werden und bildet einen Heizbereich für solche Kochgeschirre. Im Nachfolgenden wird zur Beschreibung des Induktionsgeschirrs von einem Behälter gesprochen. Darunter werden alle Gefässe, Platten, Teller, Becher, Töpfe, Pfannen etc, verstanden, die die Eigenschaft aufweisen, mindestens ein Lebensmittel aufzunehmen, zu bearbeiten, zu präsentieren oder warm zu halten.

### Stand der Technik

Bekannte Induktionsgeschirre aus Metall weisen in ihrem Bodenbereich ein ferromagnetisches Material auf, das dazu dient, ein von einer Spule erzeugtes magnetisches Wechselfeld in Wärme umzusetzen, die an ein Lebensmittel in bzw. auf dem Induktionsgeschirr zu dessen Aufwärmung abgegeben wird.

Ferner sind z. B. aus der AT 009 021 U1 Porzellanschalen bekannt, die zum Erwärmen zubereiteter Speisen mittels induzierter Wirbelströme an ihrer jeweiligen Außenseite ein lösbar angeordnetes Induktionselement aufweisen, das vorzugsweise vollständig aus einer elektrisch leitfähigen, flexiblen Folie besteht. Das Induktionselement soll dabei vorzugsweise vollflächig an der Außenwandung der Porzellanschalen anliegen und im unteren Kontaktbereich durch eine Klebemittel gehalten werden.

Auch ist es bekannt, dass man ein ferromagnetisches Material als Induktionselement vor einem Glasierungsprozess eines dielektrischen Geschirrs,auf dessen Boden aufbringt, sodass das Induktionselement nach dem Glasierungsprozess einglasiert ist. Dies bringt unter anderem den Vorteil mit sich, dass das Geschirr spülmaschinenfest ist.

### Nachteile des Standes der Technik

Die bekannten Geschirrteile weisen die Eigenschaft auf, dass ein ferromagentisches Material die gesamte Bodenfläche des Geschirrs abdeckt. Dies bedeutet, dass eine Unterseite, beispielsweise eines Tellers, vollständig mit dem ferromagnetisch Platte bedeckt ist. Auch bei Servierplatten, die überwiegend aus Porzellan bestehen, ist es bekannt, die Unterseite vollständig mit feffomagentischem Material zu beschichten, um beispielsweise an einem Warmhaltebuffet Speisen warm zu halten, wobei die Warmhaltefunktion über Induktion erreicht wird.

Die Praxis hat jedoch gezeigt, dass entweder durch eine unsachgemässe Einstellung eines Induktionsgebers (Warmhalteofen), der das magnetische Wechselfeld erzeugt, oder bei bestimmten Platten bzw. Servierschüsseln bzw. -formen derart viel Energie von dem Induktionsgeber in das ferromagentische Material eingekoppelt wird, dass das z. B. aus Porzellan bestehende Geschirr zu Bruch gehen kann, d. h., dass es aufgrund von unerwünschten Wärmedehnungen Risse oder Sprünge bekommen kann. Dies bedeutet ferner, dass durch das ferromagnetische Material in den Porzellanbehälter zu viel Energie eingebracht wird, wodurch das Geschirr beschädigt werden kann. Das Geschirr wird unbrauchbar. Es hat sich gezeigt, dass das Risiko eines Springens oder Reissens des Geschirrs beim induktiven Erwärmen mit der Größe der Bodenfläche des Geschirrs steigt.

Die europäische Patentanmeldung EP 0 688 526 A1 offenbart ein topfförmiges Gar- und/oder Kochgerät, welches für eine bodenseitige Zuführung von Wärmeenergie durch Wärmeleitung oder elektromagnetische Induktion eingerichtet ist. Ein Boden des Gar- und/oder Kochgeräts ist in Sandwichbauart mit einem austenitische Stahlblech als oberer Schicht, einem gut wärmeleitenden Kern z. B. aus einer Aluminium- oder Kupferlegierung und einer metallischen Platinenabdeckung als unterer Schicht ausgebildet. Die obere Schicht des Bodens, d. h. das austenitische Stahlblech ist als Topf geformt, d. h. einstückig mit einer Umfangswand. Die Platinenabdeckung als untere Schicht des Sandwich-Bodens weist Ausnehmungen auf, in die Füllstücke aus ferromagnetischem Stahlblech eingesetzt sind, um ein induktives Erwärmen zu ermöglichen.

### Aufgabe der Erfindung

Aufgabe der Erfindung ist es, die Wechselwirkung zwischen dem Induktionsgeber und dem ferromagnetischen Material, das an einem Boden des Geschirrs angeordnet ist, derart zu optimieren, dass eine Beschädigung des Geschirrs vermieden wird.

### Lösung der Aufgabe

Diese Aufgabe wird erfindungsgemäß durch die Merkmale des Anspruchs 1 gelöst. Die vorliegende Erfindung sieht vor, ein ferromagnetisches Material am Boden eines Induktionsgeschirrs durch Unterbrechungen in Felder zu unterteilen, die auf Teilflächen des Bodens begrenzt sind. Elektrische Wirbelströme, die ein magnetisches Wechselfeld eines Induktionsgebers erzeugt, können sich nicht über die Unterbrechungen des ferromagnetischen Materials fortsetzen sondern sind auf die Felder begrenzt. Die elektrischen Wirbelströme werden kleinflächiger als der Boden des Induktionsgeschirrs auf die Felder des ferromagnetischen Materials begrenzt, was eine gleichmässigere Wärmeverteilung auf die Fläche des Bodens des Induktionsgeschirrs bewirkt und ein Reissen oder Springen des Induktionsgeschirrs vermeidet oder jedenfalls das Risiko eines Reissens oder Springens des Induktionsgeschirrs verringert. Die Erfindung ist insbesondere für Induktionsgeschirr mit großem Boden vorgesehen, bei dem die Gefahr von Spannungsrissen groß ist.

Der Boden des erfindungsgemäßen Induktionsgeschirrs weist mindestens eine Rippe an seiner Unterseite zur Versteifung auf. Das Induktionsgeschirr kann auf dieser Rippe stehen, wenn es auf einer Unterlage abgestellt ist. Die Rippe weist bei Ausgestaltungen der Erfindung Abstand von einem Rand des Bodens auf und endet mit Abstand vom Rand des Bodens. Am Rand des Bodens kann ebenfalls eine insbesondere umlaufende Rippe vorhanden sein. Das ferromagnetische Material des Bodens zur Wärmeerzeugung durch Induktion ist an der mindestens einen Rippe ausgespart und in Verlängerung der mindestens einen Rippe bis zum Rand des Bodens des Induktionsgeschirrs oder bis zu einer weiteren Rippe unterbrochen. Das ferromagnetische Material ist dadurch in Felder unterteilt, die Teilflächen des Bodens abdecken.

Unter ferromagnetischem Material ist ein Material zu verstehen, in dem ein magnetisches Wechselfeld Wirbelströme induziert, die durch einen elektrischen Widerstand des Materials in Wärme gewandelt werden oder noch allgemeiner ein Material, das ein magnetischen Wechselfeld in Wärme wandelt.

In der Regel wird die Energie über eine oder mehrere Spulen eines oder mehrerer Induktionsgeber in das ferromagnetische Element eingekoppelt. Diese Spulen sind spiralförmig in einer ebenen Kreisfläche in dem Induktionsgeber angeordnet, der einer herkömmlichen elektrischen Kochplatte ähnlich sehen kann. Dies bedeutet, dass das erzeugte magnetische Wechselfeld vollständig in das zum Warmhalten in vorzugsweise einem sehr geringen Abstand darauf angeordnete ferromagnetische Material des Bodens des Induktionsgeschirrs Material eingekoppelt wird. Die Erfindung vermeidet extrem hohe Temperaturen und insbesondere eine extrem ungleichmäßige Temperaturverteilung dadurch, dass es das ferromagnetische Material in Felder unterteilt. Die Induktion in Feldern, die kleiner als der Boden des Induktionsgeschirrs sind, vermeidet extreme thermisch bedingte Materialspannungen im Induktionsgeschirr, und ein Reissen, Springen oder Zerbrechen.

Zusätzlich oder anstatt der Unterbrechung in Verlängerung der mindestens einen Rippe kann das ferromagnetische Material auch seitlich der mindestens einen Rippe, also innerhalb ihrer Längserstreckung, bis zum Rand des Bodens des Induktionsgeschirrs oder bis zu einer weiteren Rippe, unterbrochen und dadurch in Felder unterteilt sein.

Vorzugsweise weisen die Felder, in die das ferromagnetische Material unterteilt ist, eine homogene Fläche auf, d. h. sie sind vorzugsweise rund. Beispielsweise auch oval oder elliptisch, oder eckig ohne Innenecken, beispielsweise quadratisch, rechteckig oder vieleckig. Einschnürungen und Engstellen der Felder des ferromagnetischen Materials, an denen Feldlinien der induzierten elektrischen Wirbelströme zusammengedrängt werden, sind möglichst zu vermeiden. Eine Verdichtung der elektrischen Feldlinien bewirkt eine örtlich erhöhte Wärmeerzeugung, die de Boden des Induktionsgeschirrs ungleichmäßig erwärmt, woraus thermische Spannungen resultieren, durch die das Induktionsgeschirr reissen oder springen kann. Das ist erfindungsgemäß durch eine Formgebung der Felder des ferromagnetischen Materials ohne Einschnürungen und ohne Engstellen zu vermeiden.

Das ferromagnetische Material ist insbesondere als Schicht auf einer Unterseite des Bodens des Induktionsgeschirrs aufgebracht. Es kann beispielsweise als Folie, durch Pulverbeschichtung oder in sonstiger Weise aufgebracht und ggf. eingebrannt sein.

Die Erfindung ist insbesondere zum Warmhalten von Speisen an Büffets in der Gastronomie vorgesehen. Als Induktionsgeschirr sieht eine Ausgestaltung der Erfindung deswegen Schalen oder Schüsseln vor. Die Erfindung ist allerdings auch auf Teller, Trinkgefässe und sonstige Geschirr anwendbar.

Vorzugsweise ist der Boden des Induktionsgeschirrs eckig, insbesondere viereckig, quadratisch oder rechteckig. Diese Bodenformen lassen sich gut in nach Form und Größe zumindest näherungsweise gleiche Felder unterteilen, was die gewünschte gleichmäßige Erwärmung durch Induktion bewirkt.

Auch Induktionsgeschirr mit rundem Boden eignet sich für die Erfindung. Hier sieht eine Ausgestaltung der Erfindung ein ringförmig insbesondere am oder auch ausserhalb des Randes des Bodens angeordnetes ferromagnetische Material vor, das ferromagnetisches Material am Boden des Induktionsgeschirrs umschliesst. Das ringförmige ferromagnetische Material ist vom umgebenen Material getrennt, es besteht weder elektrisch noch magnetisch leitender Kontakt. Der umgebende Ring ferromagnetischen Materials verbessert die Wärmeerzeugung. Bei Induktionsgeschirr mit eckigem Boden ist diese Ausgestaltung normalerweise nicht erforderlich, allerdings auch nicht ausgeschlossen.

Insbesondere besteht das erfindungsgemäße Induktionsgeschirr aus einem dielelektrischen Material, vorzugsweise aus Keramik, Porzellan oder Steingut. Die Anwendung der Erfindung ist auch bei Induktionsgeschirr aus Glas, Kunststoff oder Metall möglich. Die Aufzählung ist nicht abschliessend.

Die erfindungsgemäße Ausbildung und Anordnung des ferromagnetischen Materials am Boden des Induktionsgeschirrs, insbesondere an Buffetschalen bzw. Gastronomieschalen, ist vornehmlich nur zum Warmhalten von Speisen gedacht und nicht zum Kochen.

### Zeichnung

Die Erfindung wird nachfolgend anhand eines in der Zeichnung dargestellten Ausführungsbeispiels näher erläutert. Die Figuren zeigen eine Auswahl erfindungsgemäßen Induktionsgeschirrs schräg von unten auf einen Boden des Induktionsgeschirrs gesehen.

### Beschreibung der Ausführungsbeispiele:

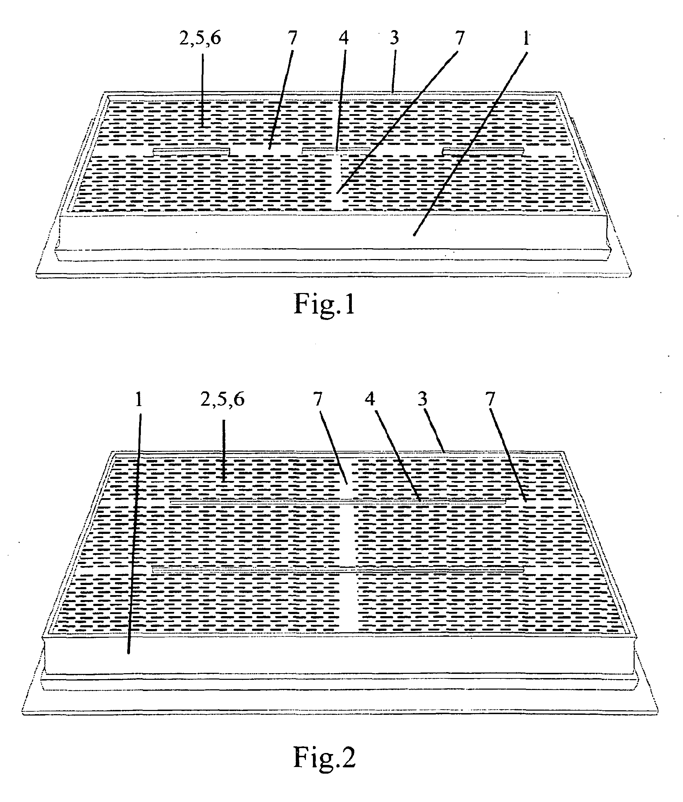

Figuren 1 bis 4 zeigen die Unterseiten erfindungsgemäßen Induktionsgeschirrs 1 in Form rechteckiger Porzellanschalen, die dazu vorgesehen sind, Speisen aufzunehmen und warmzuhalten. Ein Boden 2 des Induktionsgeschirrs 1 ist von einer umlaufenden Rippe 3 umschlossen. Ausserdem weist der Boden 2 eine oder mehrer Rippen 4 innerhalb der den Boden 2 umschliessenden Rippe 3 auf. Diese Rippen 4 sind in den Ausführungsbeispielen auf gedachten Geraden längs und/oder quer zum Boden 2 des Induktionsgeschirrs angeordnet. Wie in Figur 1 zu sehen können die Rippen 4 unterbrochen sein. Die Rippen 4 weisen Abstand von der den Boden 2 umschliessenden Rippe 3 auf, und zwar weisen sie seitlichen Abstand von der umschliessenden Rippe 3 auf und enden mit Abstand von der umschliessenden Rippe 3. Die Rippen 4 weisen somit Abstand vom Rand des Bodens 2 des Induktionsgeschirrs 1 auf.

Der Boden 2 des Induktionsgeschirrs 1 weist an seiner Unterseite eine Beschichtung 5 aus einem ferromagnetischen Material innerhalb der umschliessenden Rippe 3 auf. Das ferromagnetische Material wird nachfolgend als ferromagnetische Beschichtung 5 oder kurz als Beschichtung 5 bezeichnet. Die ferromagnetische Beschichtung 5 kann beispielsweise Silberoxid aufweisen. Die Beschichtung 5 dient einer induktiven Erwärmung des Bodens 2 zum Warmhalten von Speisen im Induktionsgeschirr 1 mit einem nicht dargestellten Induktionsgeber beispielsweise auf einem Buffet. Der Induktionsgeber kann beispielsweise einer herkömmlichen Elektroherdplatte ähnlich sehen. Er weist eine Spule zur Erzeugung eines magnetischen Wechselfelds auf, das in der ferromagnetischen Beschichtung 5 Wirbelströme induziert, die durch den elektrischen Widerstand der Beschichtung 5 in Wärme umgesetzt werden.

Die ferromagnetische Beschichtung 5 ist nicht vollflächig auf dem Boden 2 des Induktionsgeschirrs 1 angeordnet, sondern in Felder 6 unterteilt. An den Rippen 4 weist die Beschichtung 5 Aussparungen auf, die auch als Unterbrechungen 8 aufgefasst werden können und die sich in Verlängerung der Rippen 4 durchgehend bis zu der den Boden 2 umschliessenden Rippe 3 und/oder wie in Figur 1 zu sehen bis zu einer anderen Rippe 4 fortsetzen. Auch quer zu den Rippen 3, also innerhalb ihrer Längserstreckung, kann die ferromagnetische Beschichtung 5 durch Unterbrechungen 7 in Felder 6 unterteilt sein, wie es in Figuren 1 und 2 zu sehen ist.

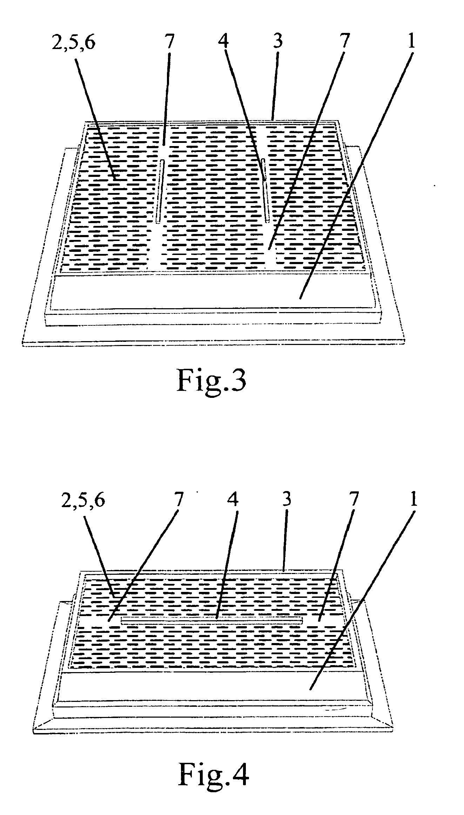

Die Unterbrechungen 7 unterteilen die ferromagnetische Beschichtung 5 des Bodens 2 des Induktionsgeschirrs 1 in voneinander getrennte Felder 6, die nach Größe und Form möglichst gleich sind. In Figur 4 ist der Boden 2 in zwei gleiche Felder 6 unterteilt, die halb so groß wie der Boden 2 sind. In Figuren 1 bis 3 ist der Boden 2 in vier, sechs und drei Felder 6 unterteilt, die einen entsprechenden Bruchteil einer Fläche des Bodens 2 einnehmen. In der ferromagnetischen Beschichtung 5 induzierte Wirbelströme sind durch die Unterteilung der Beschichtung 5 in Felder 6 auf entsprechend kleine Flächen beschränkt. Das wirkt einer örtlich ungleichmäßigen Erwärmung des Bodens 2 und dadurch Wärmespannungen entgegen, die den Boden 2 reissen lassen können. Die Unterteilung der ferromagnetischen Beschichtung 5 des Bodens 2 bewirkt eine gleichmäßigere Wärmeverteilung und mindert thermische Spannungen, die Gefahr einer Zerstörung des Induktionsgeschirrs durch thermische Spannungen ist verringert.

Die Felder 6 der thermischen Beschichtung 5 weisen keine Einschnürungen, Engstellen oder dgl. auf. Das verhindert ein Zusammendrängen von Feldlinien der induzierten Wirbelströme, eine stellenweise stärkere Wärmeerzeugung, die ebenfalls zu thermischen Spannungen führen würde, wird vermieden.

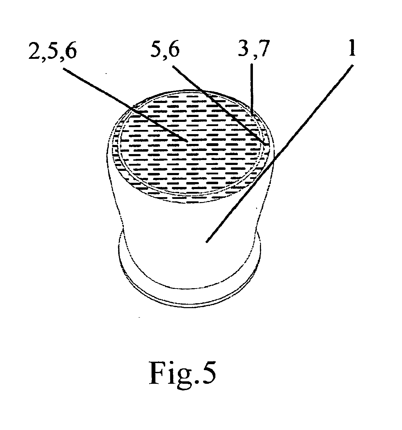

Figur 5 zeigt ein krugförmiges erfindungsgemäßes Induktionsgeschirr 1 mit einem kreisförmigen, runden Boden 2. Umlaufend am Rand weist der Boden 2 eine umschliessende Rippe 3 auf. Innerhalb der Rippe 3 ist der Boden mit einer kreisförmigen ferromagnetischen Beschichtung 5 versehen, ausserhalb der umschliessenden Rippe 3 ist eine kreisringförmige ferromagnetische Beschichtung 5 vorhanden. Beide Beschichtungen 5 können als Felder 6 aufgefasst werden, die an der umschliessenden Rippe 3 unterbrochen sind. Die Beschichtung 5 innerhalb der umschliessenden Rippe 3 kann abweichend von der Zeichnung kreisringförmig sein.

Allen beschriebenen Ausführungsformen der Erfindung ist gemeinsam, dass die von einem Induktionsgeber erzeugten Feldlinien durch die Unterbrechungen der ferromagnetischen Beschichtung 5 unterbrochen werden und somit keine großflächigen Wirbelströme mehr bilden können. Dadurch wird wiederum die Einkopplung der Energie geringer und vor allem gleichmäßiger über die Fläche des Bodens 2 des Induktionsgeschirrs 1 verteilt. Der Energiefluss wird gezielt gestört, was vorteilhaft zur Folge hat, dass eine wärmebedingte Beschädigung des für das Induktionsgeschirr 1 vorzugsweise verwendeten Porzellans nicht mehr auftritt.

### Bezugszeichenliste

- 1: Induktionsgeschirr
- 2: Boden
- 3: Rippe
- 4: Rippe
- 5: ferromagnetische Beschichtung
- 6: Feld
- 7: Unterbrechung

## Patentansprüche

1. Induktionsgeschirr (1) zum Warmhalten von Speisen, mit einem Boden (2), der ein ferromagnetisches Material (5) aufweist, das Unterbrechungen (7) aufweist und dadurch in Felder (6) unterteilt ist, **dadurch gekennzeichnet, dass** der Boden (2) mindestens eine Rippe (4) an seiner Unterseite in mindestens einer der Unterbrechungen (7) des ferromagnetischen Materials (5) aufweist.

2. Induktionsgeschirr (1) nach Anspruch 1, **dadurch gekennzeichnet, dass** der Boden (2) mindestens eine Rippe (4) an seiner Unterseite aufweist, die sich nicht an seinem Rand befindet und deren Enden Abstand vom Rand des Bodens (2) aufweisen, und dass das ferromagnetische Material (5) an der mindestens einen Rippe (4) ausgespart und in Verlängerung der mindestens einen Rippe () unterbrochen und dadurch in Felder (6) unterteilt ist.

3. Induktionsgeschirr (1) nach Anspruch 1 oder 2, **dadurch gekennzeichnet, dass** der Boden (2) mindestens eine Rippe (4) an seiner Unterseite aufweist, die sich nicht an seinem Rand befindet und deren Enden Abstand vom Rand des Bodens (2) aufweisen, und dass das ferromagnetische Material (5) innerhalb einer Längserstreckung der mindestens einen Rippe (4) eine Unterbrechung (7) aufweist und dadurch in Felder (6) unterteilt ist, die im Bereich der Längserstreckung der mindestens einen Rippe (4) enden.

4. Induktionsgeschirr (1) nach einem der Ansprüche 1 bis 3, **dadurch gekennzeichnet, dass** die Felder (6) aus dem ferromagnetischen Material (5) keine Engstellen aufweisen.

5. Induktionsgeschirr (1) nach einem der Ansprüche 1 bis 4, **dadurch gekennzeichnet, dass** der Boden (2) eine Beschichtung (5) aus dem ferromagnetischen Material (5) aufweist.

6. Induktionsgeschirr (1) nach einem der Ansprüche 1 bis 5, **dadurch gekennzeichnet, dass** das Induktionsgeschirr (1) ein Teller, ein Trinkgefäss, eine Schale oder eine Schüssel ist.

7. Induktionsgeschirr (1) nach einem der Ansprüche 1 bis 6, **dadurch** g**ekennzeichnet, dass** der Boden (2) des Induktionsgeschirrs (1) eckig, insbesondere viereckig, ist.

8. Induktionsgeschirr (1) nach einem der Ansprüche 1 bis 7, **dadurch gekennzeichnet, dass** der Boden (2) des Induktionsgeschirrs (1) rund ist.

9. Induktionsgeschirr (1) nach einem der Ansprüche 1 bis 8, **dadurch gekennzeichnet, dass** das ferromagnetische Material (5) von einem Rings ferromagnetischen Materials (5) umschlossen ist, das keinen Kontakt mit dem ferromagnetischen Material (5) innerhalb des Rings hat.

10. Induktionsgeschirr (1) nach einem der Ansprüche 1 bis 9, **dadurch gekennzeichnet, dass** das Induktionsgeschirr (1) aus einem dielektrischen Material besteht.

## Claims

1. Induction cookware (1) for keeping food warm, with a bottom (2) that comprises a ferromagnetic material (5), that comprises interruptions (7) and is divided by them into arrays (6), **characterized in that** the bottom (2) comprises at least one rib (4) on its underside in at least one of the interruptions (7) of the ferromagnetic material (5).

2. Induction cookware (1) according to claim 1, **characterized in that** the bottom (2) comprises at least one rib (4) on its underside which is not located on its edge and the ends of which are at a distance from the edge of the bottom (2), and **in that** the ferromagnetic material (5) is omitted from the at least one rib (4) and is interrupted in the extension of the at least one rib () and in this way is divided into arrays (6).

3. Induction cookware (1) according to claim 1 or 2, **characterized in that** the bottom (2) comprises at least one rib (4) on its underside which is not located on its edge and the ends of which are at a distance from the edge of the bottom (2), and **in that** the ferromagnetic material (5) comprises an interruption (7) within a longitudinal extension of the at least one rib (4) and in this way is divided into arrays (6), which end in the region of the longitudinal extension of the at least one rib (4).

4. Induction cookware (1) according to one of claims 1 to 3, **characterized in that** the arrays (6) of ferromagnetic material (5) do not have any constrictions.

5. Induction cookware (1) according to one of claims 1 to 4, **characterized in that the** base (2) has a coating (5) of the ferromagnetic material (5).

6. Induction cookware (1) according to one of claims 1 to 5, **characterized in that** the induction cookware (1) is a dinner plate, a drinking vessel, a pan or a bowl.

7. Induction cookware (1) according to one of claims 1 to 6, **characterized in that** the bottom (2) of the induction cookware (1) is angular, in particular quadrangular.

8. Induction cookware (1) according to one of claims 1 to 7, **characterized in that** the bottom (2) of the induction cookware (1) is round.

9. Induction cookware (1) according to one of claims 1 to 8, **characterized in that** the ferromagnetic material (5) is surrounded by a ring of ferromagnetic material (5) that does not have any contact with the ferromagnetic material (5) within the ring.

10. Induction cookware (1) according to one of claims 1 to 9, **characterized in that** the induction cookware (1) consists of a dielectric material.

## Revendications

1. Ustensile à induction (1) pour maintenir au chaud des plats, comportant un fond (2) qui présente un matériau ferromagnétique (5) qui présente des interruptions (7) et est de ce fait divisé en champs (6), **caractérisé en ce que** le fond (2) présente au moins une nervure (4) sur sa face inférieure dans au moins une des interruptions (7) du matériau ferromagnétique (5).

2. Ustensile à induction (1) selon la revendication 1, **caractérisé en ce que** le fond (2) présente au moins une nervure (4) sur sa face inférieure, qui ne se trouve pas sur son bord et dont les extrémités présentent une distance par rapport au bord du fond (2), et que le matériau ferromagnétique (5) est évidé à ladite au moins une nervure (4) et interrompu en prolongation de ladite au moins une nervure (4), et de ce fait divisé en champs (6).

3. Ustensile à induction (1) selon la revendication 1 ou 2, **caractérisé en ce que** le fond (2) présente au moins une nervure (4) sur sa face inférieure, qui ne se trouve pas sur son bord et dont les extrémités présentent une distance par rapport au bord du fond (2), et que le matériau ferromagnétique (5) présente une interruption (7) à l'intérieur d'une extension longitudinale de ladite au moins une nervure (4) et est de ce fait divisé en champs (6) qui se terminent dans la région de l'extension longitudinale de ladite au moins une nervure (4).

4. Ustensile à induction (1) selon une des revendications 1 à 3, **caractérisé en ce que** les champs (6) en matériau ferromagnétique (5) ne présentent pas de resserrements.

5. Ustensile à induction (1) selon une des revendications 1 à 4, **caractérisé en ce que** le fond (2) présente un revêtement (5) en matériau ferromagnétique (5).

6. Ustensile à induction (1) selon une des revendications 1 à 5, **caractérisé en ce que** l'ustensile à induction (1) est une assiette, un récipient à boire, un bol ou un saladier.

7. Ustensile à induction (1) selon une des revendications 1 à 6, **caractérisé en ce que** le fond (2) de l'ustensile à induction (1) est polygonal, en particulier quadrangulaire.

8. Ustensile à induction (1) selon une des revendications 1 à 7, **caractérisé en ce que** le fond (2) de l'ustensile à induction (1) est rond.

9. Ustensile à induction (1) selon une des revendications 1 à 8, **caractérisé en ce que** le matériau ferromagnétique (5) est entouré d'un anneau de matériau ferromagnétique (5) qui n'a pas de contact avec le matériau ferromagnétique (5) à l'intérieur de l'anneau.

10. Ustensile à induction (1) selon une des revendications 1 à 9, **caractérisé en ce que** l'ustensile à induction (1) est constitué d'un matériau diélectrique.
